# EUROPEAN PATENT SPECIFICATION

(11) **EP 1 306 169 B1**
(45) Date of publication and mention of the grant of the patent: **15.08.2007**
(21) Application number: 01125236.8
(22) Date of filing: 24.10.2001
(51) Int. Cl.: B25B 5/14

(54) **Pipe clamping jaw with fast fitting and removable adapter**
Spannbacke zum Spannen von Rohren mit schnell einsetzbaren und lösbaren Adaptern
Machoire pour le serrage de tube avec adaptateur à placement et détachement rapide

(43) Date of publication of application: 02.05.2003
(73) Proprietor: Tecnodue S.r.l., 35030 Cervarese S. Croce (PD) (IT)
(72) Inventor: Pantano, Egle, 35030 Cervarese S. Croce (IT)
(74) Representative: Gustorf, Gerhard

(56) References cited:
- EP-A- 0 852 996
- WO-A-01/28758
- DE-A- 4 121 380
- US-A- 1 641 065
- US-A- 2 678 574

## Description

The present patent relates to the tools for clamping pipes during tooling and in particular it concerns a new pipe clamping jaw equipped with fast fitting and removal adapters. A tool, disclosing in combination the features of the preamble of claim 1, is disclosed in document US 2678574.

In many pipe tooling operations, the pipes must be fixed firmly and in a precisely aligned position in order to obtain perfect workmanship.

This is the case, for example, of the joining of plastic pipes in which, in order to create a continuous duct, supports with one or more clamping jaws are used.

The pipe clamping jaws have an internal diameter the same as the diameter of a type of pipe on the market, but for pipes with smaller dimensions adapters are used, that is semi-circular inserts to be applied on the concave internal surface of the jaws.

At present the adapters are applied and fixed onto the jaws with one or more screws passing through each jaw.

This system for fixing the adapters on the jaws presents a series of drawbacks.

To fit or remove the adapters the operator must use a screwdriver or other tool, not always available in the immediate vicinity, and perform a number of turns on the screws.

The screws may become spoilt, deformed or even break, thus making it impossible to fix the adapters on the jaws.

The screws may also be lost and even in this case make it impossible to fix the adapters on the jaws.

A single pair of adapters can be applied on the jaws, and for rather smaller diameters the adapters are very bulky and can be used exclusively on those jaws.

To overcome all the above-mentioned drawbacks, a new type of pipe clamping jaw has been designed and implemented for tooling with fast fitting and removal adapters. This jaw is defined in claim 1. The dependent claims describe preferred embodiments of the invention.

In its main parts the new jaw comprises two semicircular elements forming the jaw and a series of adapters.

In addition to the side projections for the connection and closure onto the other semicircular element, each semicircular element of the jaw is provided with two or more recesses with respective rotating tooth.

Near each of the ends of the semicircular element of each jaw there are a seat and a rotating tooth. In particular, the seat is positioned on the concave inner side of the jaw and is such as to accommodate the whole rotating tooth. The rotating tooth is a linear-shaped element having an end hinged onto the inside of the above-mentioned seat. The rotation of said rotating tooth is such that it passes from a position in which it is completely housed inside the seat to a position in which its free end protrudes from the outline of the semicircular element of the jaw. In particular, when the rotating tooth protrudes from the seat its free end is directed towards the midpoint of the semicircular element, in the direction opposite to the end of the semicircular element.

An elastic element rotates said rotating tooth until it protrudes from the semicircular element.

On the rotation axis of the rotating tooth there is a lever or other device suitable for allowing the manual turning of the rotating tooth towards the inside of the seat without requiring any tool.

The adapters consist of semicircular metal parts having the same width as the jaw and are provided with two recesses or grooves on the convex outer side, near the ends of the semicircular element. In particular, these two recesses or grooves, when the adapters are correctly coupled with the jaws, correspond to the rotating wheels in such a way that the free ends of said rotating wheels fit into said recesses or grooves in the adapters, keeping them attached to the jaws.

To facilitate the centring of the adapters on the jaws there is an arched groove on the concave inner surface of the jaws and an arched ridge on the convex outer surface of the adapters.

Each adapter, moreover, is provided on its concave inner side with a further seat with rotating tooth, so as to be able to accommodate, in turn, smaller adapters.

The following is just an example among many of a practical embodiment of the invention in question, illustrated in the attached drawings, wherein:

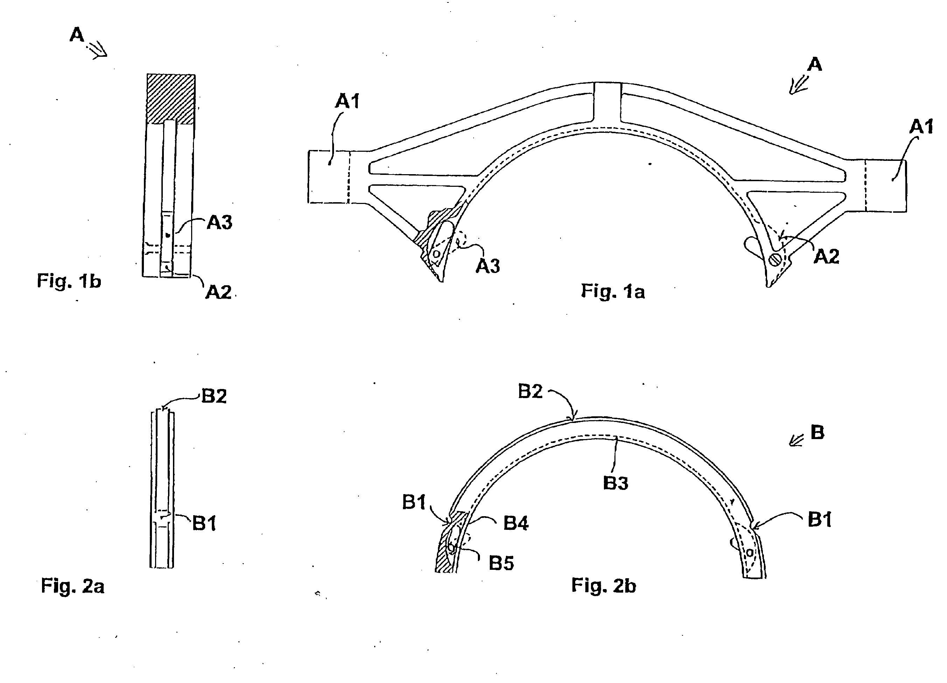

Figure 1a shows a partial section of a semicircular element (A) of the new jaw, in which it is possible to observe the side projections (A1) for the connection and the closure with the other semicircular element (A), the seat (A2) and the rotating tooth (A3).
Figure 1b shows a vertical section of the same semicircular element (A) of the new jaw in which it is possible to observe the seat (A2), the rotating tooth (A3) and the groove (A4) that mates with the adapters (B).
Figure 2a shows a semicircular adapter (B) equipped with recesses (B1) near its ends for mating with the rotating teeth (A3) of the jaw (A), a ridge (B2) on its convex outer side, a groove (B3) on its concave inner part, seats (B4) and rotating teeth (B5) near its ends.
Figure 2b shows a side view of the same adapter (B) in which it is possible to observe the ridge (B2) on the convex outer side and the recess (B1) that mates with the rotating teeth (A3) of the jaw (A).

The new jaw with the respective adapters offers a whole series of advantages: to apply an adapter it is sufficient to insert it in the concave inner side of the jaw until the toothed ridges catch it exactly, fitting into the recesses or grooves in the adapter itself; to remove the adapter it is sufficient to regulate the levers of the rotating teeth, bringing them back into their seats and thus releasing the adapters; when both applying and removing the adapters there is no need for general or special tools, it is possible to apply several overlapping adapters in order to achieve the desired diameter.

With reference to the above description and to the enclosed table, the following claims are therefore put forth.

## Claims

1. Jaw with semicircular elements (A) for clamping pipes equipped with semicircular removable adapters (B), each semicircular element (A) of the jaw is provided on its concave inner part, near the ends, with two seats (A2), **characterized in that** each one of said seats houses a rotating tooth (A3) hinged into said seat (A2) and wherein said rotating tooth (A3) can turn from a position in which it is completely housed inside the seat (A2) to a position in which its free end protrudes outside the seat (A2) and faces towards the midpoint of the semicircular element (A), and wherein an elastic element holds the rotating tooth with the end protruding from the seat.

2. Jaw with semicircular elements (A) for clamping pipes equipped with semicircular adapters (B) according to claim 1, **characterised in that** a lever or projection connected to each rotating tooth (A3) allows the rotating tooth (A3) to be turned by hand inside its seat.

3. Jaw with semicircular elements (A) for clamping pipes equipped with semicircular adapters (B) according to claims 1 or 2 **characterised in that** each semicircular adapter (B) is provided on its convex outer side, near the ends, with recesses (B1) suitable for accommodating the free end of the rotating teeth (A3) of the jaws.

4. Jaw with semicircular elements (A) for clamping pipes equipped with semicircular adapters (B) according to any of claims 1-3 **characterised in that** the jaw is provided with a groove (A4) on its concave inner part, and wherein each adapter is provided on its convex outer surface with a ridge (B2) complementary to said groove (A4) in the jaw.

5. Jaw with semicircular elements (A) for clamping pipes equipped with semicircular adapters (B) according to any of claims 1-4 **characterised in that** the adapters (B) are provided on their inner concave part with two seats (B4) with rotating teeth (B5) and a groove (B3), so as to accommodate further adapters with smaller dimensions.

## Patentansprüche

1. Spannbacke mit halbkreisförmigen Elementen (A) zum Einspannen von Rohren und mit abnehmbaren, halbkreisförmigen Adaptern (B), wobei jedes halbkreisförmige Element (A) der Spannbacke auf seiner konkaven Innenseite in der Nähe der Enden zwei Sitze (A2) aufweist, **dadurch gekennzeichnet, daß** jeder der Sitze (A2) einen drehbaren Finger (A3) aufnimmt, der in dem Sitz (A2) schwenkbar gelagert ist und der aus einer Stellung, in der er vollständig in dem Sitz (A2) versenkt ist, in eine Stellung verdrehbar ist, in der sein freies Ende aus dem Sitz (A2) hervorsteht und zum Mittelpunkt des halbkreisförmigen Elementes (A) gerichtet ist, wobei ein elastisches Element den drehbaren Finger (A3) so hält, daß sein Ende aus dem Sitz (A2) hervorsteht.

2. Spannbacke mit halbkreisförmigen Elementen (A) zum Einspannen von Rohren und mit halbkreisförmigen Adaptern (B) nach Anspruch 1, **dadurch gekennzeichnet, daß** ein mit jedem drehbaren Finger (A3) verbundener Hebel oder Vorsprung ein manuelles Rückschwenken des drehbaren Fingers (A3) in seinen Sitz (A2) hinein gestattet.

3. Spannbacke mit halbkreisförmigen Elementen (A) zum Einspannen von Rohren und mit halbkreisförmigen Adapatern (B) nach Anspruch 1 oder 2, **dadurch gekennzeichnet, daß** jeder halbkreisförmige Adapter (B) an seiner konvexen Außenseite in der Nähe der Enden Aussparungen (B1) zur Aufnahme der freien Enden der drehbaren Finger (A3) der Spannbacke aufweist.

4. Spannbacke mit halbkreisförmigen Elementen (A) zum Einspannen von Rohren und mit halbkreisförmigen Adaptern (B) nach einem der Ansprüche 1 bis 3, **dadurch gekennzeichnet, daß** die Spannbacke an ihrer konkaven Innenseite eine Nut (A4) aufweist und daß jeder Adapter (B) an seiner konvexen Außenseite eine zur Nut (A4) komplementäre Rippe (B2) hat.

5. Spannbacke mit halbkreisförmigen Elementen (A) zum Einspannen von Rohren und mit halbkreisförmigen Adaptern (B) nach einem der Ansprüche 1 bis 4, **dadurch gekennzeichnet, daß** die Adapter (B) an ihrer konkaven Innenseite zwei Sitze (B4) mit drehbaren Fingern (B5) und eine Nut (B3) aufweisen, so daß weitere Adapter kleinerer Abmessungen aufgenommen werden können.

## Revendications

1. Mâchoire pour le serrage de tubes formée d'éléments semi-circulaires (A) et d'adaptateurs semi-circulaires (B), chaque élément semi-circulaire (A) de la mâchoire présentant aux extrémités de sa surface concave interne deux logements (A2), **caractérisée par le fait que** chacun des logements (A2) abrite un doigt orientable (A3) pouvant pivoter à partir d'une position rentrée et complètement noyée dans ledit logement jusqu'à une position sortie dans laquelle son extrémité libre fait saillie hors du logement (A2) et est orientée vers le centre dudit élément semi-circulaire (A), un élément élastique maintenant le doigt orientable (A3) en position sortie de son extrémité.

2. Mâchoire pour le serrage de tubes formée d'éléments semi-circulaires (A) et d'adaptateurs semi-circulaires (B) selon la revendication 1, **caractérisée par le fait qu'**un levier, ou une partie en saillie, relié à chaque doigt orientable (A3), permet de faire revenir manuellement le doigt orientable (A3) dans son logement (A2).

3. Mâchoire pour le serrage de tubes formée d'éléments semi-circulaires (A) et d'adaptateurs semi-circulaires (B) selon la revendication 1 ou 2, **caractérisée par le fait que** chaque adaptateur semi-circulaire (B) présente sur les extrémités de sa surface externe convexe des évidements (B1) logeant les extrémités libres des doigts orientables (A3) de la mâchoire.

4. Mâchoire pour le serrage de tubes formée d'éléments semi-circulaires (A) et d'adaptateurs semi-circulaires (B) selon une quelconque des revendications 1 à 3, **caractérisée par le fait que** ladite mâchoire présente sur sa surface concave interne une rainure (A4) et que chaque adaptateur (B) présente sur sa surface convexe externe une ailette (B2) complémentaire à ladite rainure (A4).

5. Mâchoire pour le serrage de tubes formée d'éléments semi-circulaires (A) et d'adaptateurs semi-circulaires (B) selon une quelconque des revendications 1 à 4, **caractérisée par le fait que** les adaptateurs (B) présentent sur leur surface interne deux logements (B4) munis de doigts orientables (B5) et une rainure (B3) pouvant recevoir des adaptateurs additionnels de moindres dimensions.
